# EUROPÄISCHE PATENTSCHRIFT

(11) **EP 1 669 963 B1**
(45) Veröffentlichungstag und Bekanntmachung des Hinweises auf die Patenterteilung: **30.01.2019**
(21) Anmeldenummer: 05026658.4
(22) Anmeldetag: 07.12.2005
(51) Int. Cl.: G09B 21/00, G06F 3/01

(54) **Verfahren zum Verbessern der Sehfähigkeit einer sehbehinderten Person und Sehhilfe**
Method for improving the visual capacity of a visually impaired person and visual aid
Procédé destiné à l'amélioration de la vision d'une personne handicapée de la vue et aide à la vision

(30) Priorität: 08.12.2004 DE 102004059249; 06.01.2005 DE 102005000820
(43) Veröffentlichungstag der Anmeldung: 14.06.2006
(73) Patentinhaber: Carl Zeiss AG, 73447 Oberkochen (DE)
(72) Erfinder: Spruck, Bernd, 73563 Mögglingen (DE); Rottenkolber, Birgit, 73527 Schwäbisch Gmünd (DE); Brattke, Simon, 73447 Oberkochen (DE); Edelmann, Martin, 73431 Aalen (DE); Wurscher, Norbert, 73431 Aalen (DE); Landsinger, Rüdiger, 73560 Böbingen (DE)
(74) Vertreter: Witte, Weller & Partner Patentanwälte mbB

(56) Entgegenhaltungen:
- WO-A-00/64140
- WO-A-01/88896
- US-A- 5 125 046
- US-A- 5 579 026
- US-A- 5 629 988
- US-A- 6 084 556

## Beschreibung

Die Erfindung betrifft eine Sehhilfe für sehbehinderte Personen, mit einem ein Bild aufnehmenden Bildaufnahmegerät, mit einem an das Bildaufnahmegerät angeschlossenen Bildspeicher und mit einem an den Bildspeicher angeschlossenen, am Kopf einer Person getragenen Bildwiedergabegerät.

Ein Verfahren und eine Sehhilfe der vorstehend genannten Art sind aus dem Dokument US 6 731 326 B1 bekannt.

Bei sehbehinderten Personen müssen für die Verbesserung der Sehfähigkeit bei einem Visus kleiner ab etwa 0,4 besondere Sehhilfen eingesetzt werden. Dazu zählen beispielsweise vergrößernde Sehhilfen, die mit einem Fernrohrsystem ausgestattet sind. Diese Sehhilfen liefern damit zwar ein vergrößertes Bild und somit theoretisch eine bessere Sicht, gleichzeitig entsteht jedoch infolge der um den Vergrößerungsfaktor erhöhten Winkelgeschwindigkeit bereits bei geringfügiger Kopfbewegung eine Bewegungsunschärfe.

Weiterhin sind als Sehhilfe so genannte Handscanner bekannt. Diese sind mit einer vergrößernden Optik ausgestattet. Das aufgenommene Bild kann über ein Bildschirmlesegerät betrachtet werden. Nachteil dieser Handscanner ist, dass infolge der Handführung des Scanners eine bogenförmige Bewegung entsteht und somit beim Lesen eines Textes schnell die richtige Zeile verlassen oder verfehlt wird. Weiterhin ist es dabei problematisch, am Ende einer Textzeile den Anfang der nächsten Textzeile aufzufinden. Es sind zwar auch Handscanner mit Rollwagen oder linearen Führungsschienen bekannt, diese Lösungen sind jedoch unhandlich und schwer.

Ferner sind Anordnungen bekannt, bei denen ein am Kopf getragenes Kamerasystem mit Fernrohrvorsatz verwendet wird. Dabei wird das von der Kamera gelieferte Bild einem ebenfalls am Kopf getragenen, brillenartigen Bildwiedergabegerät (sog. "Head Mounted Display" - HDM) zugeführt. Nachteil dieser bekannten Systeme ist, dass insbesondere bei Zitterbewegungen des Kopfes ein Verschmieren des Bildes auftritt. Wenn die sehbehinderte Person mit einem derartigen System einen Text liest und der Textzeile mit einer Drehbewegung des Kopfes folgt, hat die überlagerte Zitterbewegung zur Folge, dass die Lesefähigkeit deutlich eingeschränkt wird.

Aus dem eingangs genannten Dokument US 6 731 326 B1 ist eine Sehhilfe in mehreren unterschiedlichen Ausführungsbeispielen bekannt.

Bei einer ersten Variante wird eine stationär angeordnete Kamera verwendet, die mittels eines manuellen Bediengerätes verschwenkt und gezoomt werden kann. Das von der Kamera aufgenommene Bild wird auf dem Bildschirm eines Fernsehgerätes dargestellt. Diese Variante ist somit nur zum Abtasten von stationären Vorlagen geeignet und auch nur stationär verwendbar.

Bei einer zweiten Variante trägt die Person am Kopf einen Sensor (sog. "Head Mouse"), mit dem durch Bewegen des Kopfes ein Cursor auf einem Bildschirm gesteuert werden kann, um eine zu vergrößernde Stelle einer Vorlage zu markieren. Auch diese Variante ist daher stationär und eher nur für das Betrachten von Bildern geeignet.

Bei einer dritten Variante trägt die Person am Kopf sowohl ein brillenartiges Bildwiedergabegerät als auch eine Kamera. Mit einem manuellen Bediengerät wird die Kamera geschwenkt und gezoomt und das von der Kamera aufgenommene Bild in dem Bildwiedergabegerät dargestellt. Diese Variante ist zwar mobil, sie hat aber den bereits oben erwähnten Nachteil, dass eine Zitterbewegung des Kopfes sich sogleich auf die Kamera überträgt und damit die Qualität des aufgenommenen Bildes beeinträchtigt. Zum Lesen von Texten ist diese Variante daher ungeeignet.

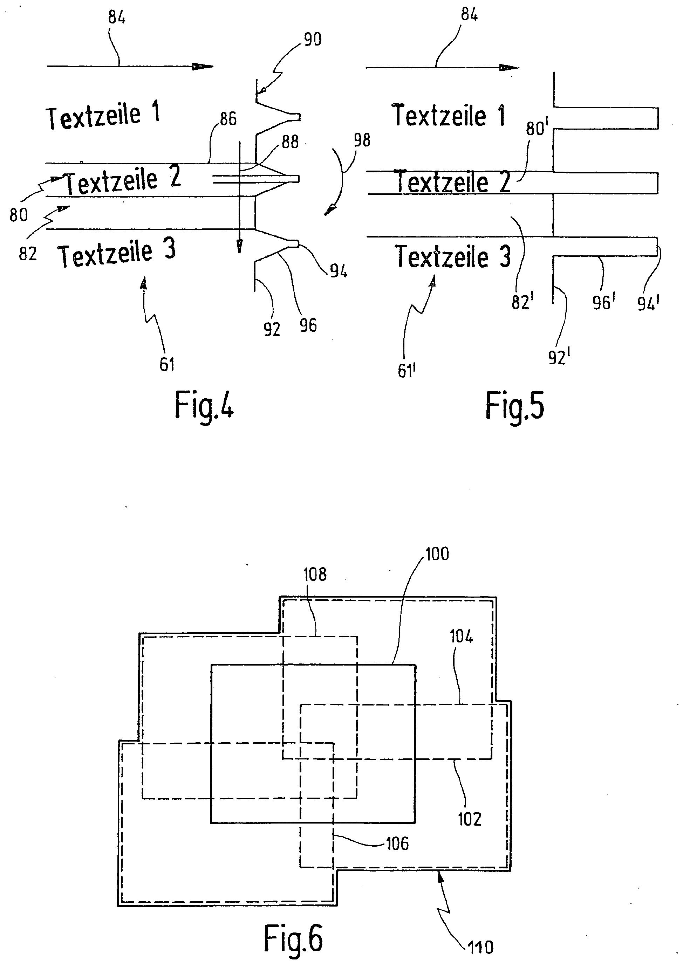

Aus dem Dokument US 6 084 556 A1 ist ein virtueller Computermonitor bekannt. Bei einem Ausführungsbeispiel des Monitors (Fig. 6) ist eine Videokamera vorgesehen, die ein Bild einer Vorlage aufnimmt. Die Kamera ist an einen Personal Computer (PC) mit handelsüblicher WINDOWS ®-Oberfläche angeschlossen. Eine Person trägt an ihrem Kopf ein Bildwiedergabegerät sowie einen Sensor zum Erfassen von Kopfbewegungen. Das Bildwiedergabegerät und der Sensor sind über eine Software des PC miteinander verknüpft. Mittels dieser Software kann die Person durch gezielte Bewegung ihres Kopfes bestimmen, welchen Ausschnitt des von der Videokamera aufgenommenen Bildes sie sehen möchte, beispielsweise in Form eines sog. "Scrolling". All diese Vorgänge laufen in Echtzeit, d.h. zeitgleich ab.

Aus der US 5 629 988 A1 sind ein System sowie ein Verfahren zum elektronischen Stabilisieren eines Bildes, beispielsweise eines Bildes einer Videokamera, bekannt. Dabei wird die Bewegung der Videokamera mittels eines Sensors erfasst und das Sensorsignal zum Stabilisieren des Bildes verwendet. Auf diese Weise können unerwünschte Zitterbewegungen kompensiert werden, die eine Ortsverlagerung der Videokamera zwischen zwei aufgenommenen Bildern erzeugen.

Der Erfindung liegt demgegenüber die Aufgabe zugrunde, eine Sehhilfe der eingangs genannten Art dahingehend weiterzubilden, dass diese Nachteile vermieden werden. Insbesondere sollen ein Verfahren und eine Sehhilfe bereitgestellt werden, die sehbehinderten Personen ein verbessertes Lesen von Texten ermöglicht, und zwar sowohl in stationärer wie auch in mobiler Weise.

Diese Aufgabe wird durch die Merkmale des unabhängigen Anspruchs vollkommen gelöst.

Die Erfindung hat den Vorteil, dass die Person das Bild zeitlich versetzt betrachten kann. Die Person kann daher zum Beispiel eine Vorlage zunächst aufnehmen und dann später in aller Ruhe betrachten.

Diese Erfindung hat ferner den Vorteil, dass das Lesen von Texten auch dann in einfacher Weise ermöglicht wird, wenn der Text schräg zur Zeilenrichtung oder in ungeregelter Weise aufgenommen wurde, insbesondere durch manuelle Bewegungen.

Bei Ausführungsformen werden Bewegungen des Kopfes erfasst, und das Bild wird im Bildspeicher in Abhängigkeit von den Bewegungen modifiziert, bzw. es ist ein Sensor zum Erfassen von Bewegungen des Kopfes vorgesehen, wobei der Sensor an den Bildspeicher angeschlossen ist, derart, dass ein im Bildspeicher gespeichertes Bild in Abhängigkeit von den Bewegungen modifiziert und an das Bildwiedergabegerät weitergeleitet wird.

Dadurch, dass zwischen dem Bildaufnahmegerät und dem Bildwiedergabegerät ein mittels Kopfbewegungen steuerbarer Bildspeicher zum Speichern und Verarbeiten des von der Kamera aufgenommenen Bildes angeordnet ist, kann eine vielfältige Optimierung des Bildes bewirkt werden, bei der Störeinflüsse korrigiert werden, die bei herkömmlichen Sehhilfen die Lesefähigkeit einschränken.

Das Bildaufnahmegerät kann manuell gehalten oder vom Kopf der Person getragen, oder es ist stationär angeordnet.

Diese Maßnahmen haben den Vorteil, dass auf die Besonderheiten des jeweiligen mobilen oder stationären Einsatzes Rücksicht genommen werden kann.

In bevorzugter Weise ist das Bildaufnahmegerät als Kamera, insbesondere als Zeilenkamera, ausgebildet. Grundsätzlich können als Bildaufnahmegerät uch andere geeignete Anordnungen verwendet werden, beispielsweise Scanner, Flächensensoren und dgl.

Bei weiteren bevorzugten Ausführungsformen wird in dem Aufnahmemodus zunächst eine Mehrzahl von Einzelbildern eines Gesamtbildes aufgenommen und alsdann das Gesamtbild aus den Einzelbildern elektronisch zusammengesetzt.

Diese Maßnahme hat den Vorteil, dass auch großformatige Vorlagen zunächst aufgenommen werden, beispielsweise durch manuelles Abscannen mit der Kamera, und dass aus den dabei aufgenommenen mehr oder weniger ungeordneten Einzelbildern anschließend durch elektronische Bildverarbeitung ein nahtloses Gesamtbild hergestellt wird, das einerseits alle interessierenden Bildinhalte enthält und andererseits später in Ruhe in den besonders interessierenden Details betrachtet werden kann.

In entsprechender Weise kann in dem Aufnahmemodus zunächst ein Gesamtbild aufgenommen und alsdann ein Ausschnitt aus dem Gesamtbild gebildet werden. Diese Maßnahme hat den Vorteil, dass in der bereits genannten Weise aus einer großen Bild- oder Textvorlage zu einem frei wählbaren Zeitpunkt ein besonders interessierender Ausschnitt betrachtet werden kann.

Vorzugsweise wird dabei der Ausschnitt durch ein optisches Zoomen einer als Bildaufnahmegerät verwendeten Kamera gebildet oder dadurch, dass aus einem abgespeicherten hochaufgelösten elektronischen Bild nur ein Teil des Speicherinhaltes ausgelesen wird.

Hierbei ist bevorzugt, wenn der Ausschnitt mittels eines manuellen Eingabegerätes definiert wird.

Bei einer bevorzugten ersten Variante wird der aufgenommene Text in der für die Wiedergabe vorgesehenen Richtung linienweise nach Grauwert integriert, wobei die Lage der Linien stufenweise senkrecht zu der Richtung variiert wird; der aufgenommene Text wird nach der Integration in seiner Ebene so lange gedreht und die Integration wiederholt, bis der Übergang der Integrale des Grauwertes entlang der Linien im Übergang von einer Textzeile zu einer angrenzenden Leerzeile eine maximale Steilheit aufweist.

Diese Maßnahme hat den Vorteil, dass für die korrekte Ausrichtung der Textzeilen in Leserichtung ein zuverlässiges und einfach handhabbares Kriterium verwendet werden kann, nämlich eine Regelung auf einen Maximalwert eines Grauwertintegrals.

Be einer zweiten Variante wird der aufgenommene Text hingegen einer 2D-Fourier-Transformation unterworfen und in Abhängigkeit von dem Ergebnis der Transformation in seiner Ebene gedreht, bis die Zeilen des aufgenommenen Textes parallel zu einer für die Wiedergabe vorgesehenen Richtung verlaufen.

Bei einem weiteren Ausführungsbeispiel wird das modifizierte Bild im Wiedergabemodus zeilenweise im Bildwiedergabegerät dargestellt, wobei die Zeilen mit einem Vorschub dargestellt werden und die Vorschubgeschwindigkeit in Abhängigkeit von den Bewegungen, vorzugsweise proportional zu einer Winkelgeschwindigkeit beim Verdrehen des Kopfes eingestellt wird.

Diese Maßnahme hat den Vorteil, dass die Person die Vorschubgeschwindigkeit des Textes in den Bildwiedergabegeräten feinfühlig durch eine Kopfbewegung steuern kann.

Hierbei ist besonders bevorzugt, wenn das modifizierte Bild vergrößert wird, und der Vergrößerungsfaktor in Abhängigkeit von den Bewegungen, vorzugsweise umgekehrt proportional zu einer Winkelgeschwindigkeit beim Verdrehen des Kopfes eingestellt wird.

Diese Maßnahme hat den Vorteil, dass eine automatische Anpassung der Vergrößerung an die mit der Kopfbewegung gewünschte Vorschubgeschwindigkeit stattfindet, was natürlich auch umgekehrt realisiert werden kann, indem die Vorschubgeschwindigkeit in Abhängigkeit von der gewünschten Vergrößerung nachgestellt wird.

Bevorzugt ist ferner, wenn bei dem Darbieten eines in Zeilen wiedergegebenen Textes und bei einer Bewegung des Kopfes in Textrichtung die Wiedergabe am Ende einer Zeile an den Anfang der folgenden Zeile springt oder umgekehrt bei dem Darbieten eines in Zeilen wiedergegebenen Textes und bei einer Bewegung des Kopfes entgegen der Textrichtung die Wiedergabe am Anfang einer Zeile an das Ende der vorhergehenden Zeile springt.

Diese Maßnahme hat den Vorteil, dass der Anschluss von einer Textzeile zur nächsten zuverlässig hergestellt wird und nicht mühsam, beispielsweise von Hand gesucht werden muss.

Falls keine automatische Weiterschaltung der Textzeilen gewünscht wird, ist bevorzugt, wenn der Sprung durch eine Nickbewegung des Kopfes ausgelöst wird.

Diese Maßnahme hat den Vorteil, dass die Person selber bestimmen kann ob und wann sie mit dem Lesen der nächsten Zeile fortfahren möchte.

Bei weiteren Ausführungsformen wird im Bildspeicher eine Kompensation von Zitterbewegungen des Kopfes durchgeführt.

Diese Maßnahme hat den Vorteil, dass die ohnehin vorhandenen Sensoren am Kopf der Person dazu verwendet werden können, um Zitterbewegungen zu kompensieren, die ansonsten zu einem Verschmieren des Bildes führen würden.

Bei einem Ausführungsbeispiel werden die Bewegungen mittels eines von der Person manuell gehaltenen oder vom Kopf der Person getragenen Bildaufnahmegeräts erfasst bzw. ist der mindestens eine Sensor als ein manuell von der Person gehaltenes oder am Kopf der Person getragenes Bildwiedergabegerät ausgebildet.

Diese Maßnahmen haben den Vorteil, dass auf separate Sensoren verzichtet werden kann, da aus den aufgenommen Bildern der Kamera die Bewegungen der Hand bzw. des Kopfes direkt abgeleitet werden können.

Schließlich ist noch möglich, dass bei dem bei einer zeilenweise Wiedergabe eines Textes der Text parallel als Sprachsignal ausgegeben wird.

Bei Ausführungsformen von Sehhilfen sind Mittel vorgesehen, um in dem Aufnahmemodus zunächst ein Gesamtbild aufzunehmen und alsdann einen Ausschnitt aus dem Gesamtbild zu bilden. Diese Mittel können als Zoomobjektiv der Kamera ausgebildet sein oder als elektronische Schaltung, die aus einem abgespeicherten hochaufgelösten elektronischen Bild nur ein Teil des Speicherinhaltes auslesen.

Es kann ein manuelles Eingabegerät zum Definieren des Ausschnitts, insbesondere zum Einstellen einer Vergrößerung, vorgesehen ist, beispielweise eine Maus.

Dabei wird eine besonders gute Wirkung erzielt, wenn das Eingabegerät von einer Unterlage abhebbar ist und Mittel zum Erfassen des Abstandes von der Unterlage aufweist, und ferner der Ausschnitt in Abhängigkeit von dem Abstand definiert, insbesondere eine Vergrößerung des Ausschnittes in Abhängigkeit von dem Abstand eingestellt wird.

Diese Maßnahme hat den Vorteil, dass eine "virtuelle Lupe" realisiert wird, deren Handhabung der einer herkömmlichen Linsenlupe entspricht.

Bei Ausführungsformen ist an den Bildspeicher ferner ein Handscanner angeschlossen, und Ausgangssignale des Handscanners sind alternativ zu den Ausgangssignalen der Kamera in den Bildspeicher einlesbar.

Diese Maßnahme hat den Vorteil, dass die Sehhilfe besonders vielseitig einsetzbar ist.

Weiterhin ist bevorzugt, wenn das Bildwiedergabegerät schwenkbar an der Brille befestigt ist, derart, dass es in einer ersten Stellung außerhalb des Gesichtsfeldes der Brille und in einer zweiten Stellung im Gesichtsfeld der Brille angeordnet ist.

Diese Maßnahme hat den Vorteil, dass die Person sich in einer Umgebung beispielsweise mit einer normalen Brille grob orientieren kann und erst zum Erkennen von Details, beispielsweise zum lesen von Texten auf die Sehhilfe zurückgreifen kann, indem in einfacher Weise die Bildwiedergabegeräte vor die Brillengläser geklappt werden.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: den Kopf einer sehbehinderten Person, in einer Seitenansicht, wobei die Person Komponenten eines Ausführungsbeispiels einer erfindungsgemäßen Sehhilfe am Kopf trägt und sich ein Bildwiedergabegerät der Sehhilfe in einer ersten Betriebsstellung befindet;
- Figur 2;: eine Darstellung ähnlich Figur 1, wobei sich das Bildwiedergabegerät in einer zweiten Betriebsstellung befindet;
- Figur 3:: eine äußerst schematisierte vollständige Darstellung der erfindungsgemäßen Sehhilfe;
- Figur 4:: eine Darstellung eines aus Textzeilen bestehenden Bildes zur Erläuterung einer bestimmten Eigenschaft der erfindungsgemäßen Sehhilfe, in einem ersten Verfahrensschritt;
- Figur 5:: eine Darstellung, ähnlich Figur 4, jedoch für einen zweiten Verfahrensschritt; und
- Figur 6:: eine ebenfalls schematisierte Darstellung zur Erläuterung einer weiteren Eigenschaft der erfindungsgemäßen Sehhilfe.

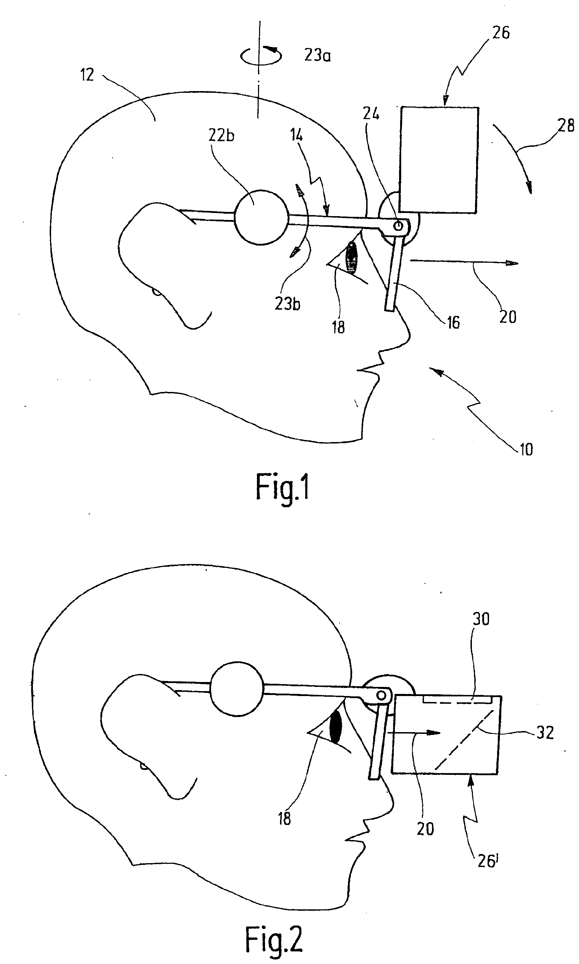

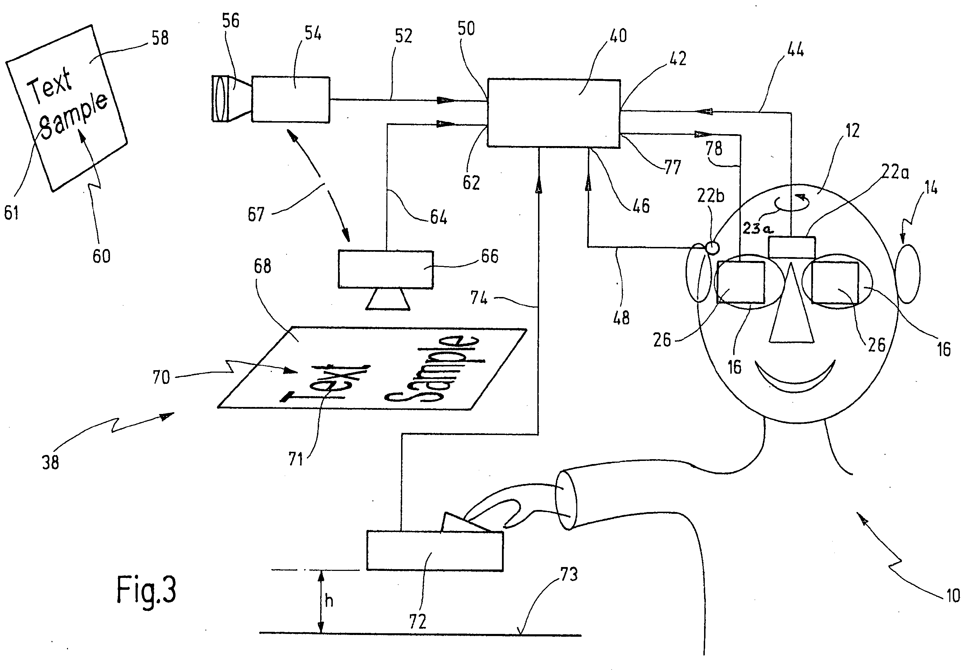

In Figur 1 und 3 ist mit 10 eine sehbehinderte Person bezeichnet. Es sei für das geschilderte Ausführungsbeispiel angenommen, dass die Person 10 noch so viel Sehkraft besitzt, dass sie sich in ihrer Umgebung grob orientieren kann, dass aber die Sehkraft nicht mehr ausreicht, um Details wahrzunehmen, beispielsweise um einen Text zu lesen.

Die Person 10 trägt an ihrem Kopf 12 eine Brille 14 mit herkömmlichen optischen Gläsern 16. Die Gläser 16 sind hinsichtlich der angesprochenen Groborientierung der Person 10 in ihrer Umgebung optimiert. Ein Auge der Person 10 ist mit 18 bezeichnet und die Blickrichtung bzw. das Sehfeld mit 20. In Figur 1 wird die Brille 14 in der üblichen Weise benutzt; die Person 10 blickt nur durch die Gläser 16 hindurch.

Auf diese Weise kann die Person 10 sich in ihrer Umgebung bewegen. Wenn sie sich beispielsweise in einem Bahnhof aufhält, kann die Person 10 ihren Weg finden. Wenn sie jedoch beispielsweise einen dort aushängenden Fahrplan studieren möchte, reicht ihre Sehfähigkeit nicht aus, um den Text des Fahrplanes zu lesen. Die Sehfähigkeit der Person ist auch so weit vermindert, dass ihr das Lesen mit einer normalen Brille nicht ermöglicht werden kann. Um der Person in einer derartigen Situation zu helfen, sind erfindungsgemäß mehrere Maßnahmen vorgesehen.

Die Brille 14 ist mit Sensoren versehen, von denen in Figur 3 ein mittig zwischen den Brillengläsern 16 sitzender erster Sensor 22a und in Figur 1 ein seitlich auf einem Brillenbügel angeordneter zweiter Sensor 22b gezeigt sind. Diese Anzahl und Positionierung der Sensoren 22a und 22b ist dabei selbstverständlich nur als Beispiel zu verstehen. Der erste Sensor 22a ist, wie in Figur 3 mit einem Pfeil 23a angedeutet, ein Drehratensensor, der eine Drehbewegung des Kopfes 12 erfasst, wie sie typischerweise beim Lesen von Zeilen eines Textes auftritt. Der zweite Sensor 22b hingegen ist, wie mit einem Pfeil 23b in Figur 1 angedeutet, ein Neigungssensor, der eine Nickbewegung des Kopfes 12 erfasst. Mit den Sensoren 22a und 22b können also beliebige willkürliche Bewegungen des Kopfes 12 erfasst werden, aber auch unwillkürliche, beispielsweise alters- oder krankheitsbedingte Zitterbewegungen.

Es sei bereits an dieser Stelle darauf hingewiesen, dass die Bewegungen des Kopfes 12 mit einer daran angeordneten Kamera oder auch einer Hand, von der die Kamera 54 gehalten wird, unmittelbar und ohne den Einsatz von Sensoren erfasst werden können, indem man von der Kamera aufgenommene aufeinander folgende Bilder entsprechend bearbeitet.

Die Brille 14 ist im Bereich neben den Gläsern 16 mit Gelenken 24 versehen. In den Gelenken 24 sind oberhalb der Gläser 16 Bildwiedergabegeräte 26 schwenkbar befestigt. Die Bildwiedergabegeräte 26 sind, wie eine erste Stellung in Figur 1 zeigt, nach oben aus dem Gesichtsfeld 20 der Person 10 wegschwenkbar, können aber auch in Richtung des Pfeiles 28 nach vorne und unten geschwenkt werden, bis sie die in Figur 2 dargestellte Stellung 26' einnehmen. In dieser zweiten Stellung 26' geht die Blickrichtung 20 der Augen 18 in das Bildwiedergabegerät 26 hinein.

Das Bildwiedergabegerät 26 ist beispielsweise innen an seiner Oberseite mit einem Display 30 versehen. Dessen Bild wird über einen Umlenkspiegel 32 in die Blickrichtung 20 gelenkt, so dass die Augen 18 der Person 10 das auf dem Display 30 dargestellte Bild sehen. Das Bildwiedergabegerät 26 ist in den Figuren nur beispielhaft dargestellt. Es kann in mannigfacher Weise variiert werden. Kopfgetragene Bildwiedergabegeräte der hier interessierenden Art sind unter der englischen Bezeichnung "Head Mounted Display" (HMD) allgemein bekannt und kommerziell erhältlich.

Figur 3 zeigt Einzelheiten der erfindungsgemäßen Sehhilfe, die hier insgesamt mit 38 bezeichnet ist.

Die Sehhilfe 38 enthält als zentrale Einheit einen Bildspeicher 40. Der Bildspeicher 40 umfasst dabei nicht nur Speicherelemente sondern auch Prozessoren zur Verarbeitung von Signalen und Daten sowie die dafür erforderliche Peripherie. Diese Elemente sind dem Fachmann bekannt und daher in Figur 3 der Übersichtlichkeit halber nicht dargestellt.

Ein erster Eingang 42 des Bildspeichers 40 ist über eine Leitung 44 mit dem ersten Sensor 22a verbunden.

Ein zweiter Eingang 46 ist über eine Leitung 48 zu dem zweiten Sensor 22b geführt.

An einen dritten Eingang 50 ist über eine Leitung 52 ein Bildaufnahmegerät angeschlossen. Das Bildaufnahmegerät ist im dargestellten Ausführungsbeispiel als eine Kamera 54 ausgebildet. Es versteht sich jedoch, dass ebenso gut auch andere flächenhafte Sensoren als Bildaufnahmegerät verwendet werden können, beispielsweise ein Scanner. Die Kamera 54 ist vorzugsweise eine elektronische Zeilenkamera mit einem CCD-Bildsensor, um Bilder auf elektronischem Wege punkt- und zeilenweise aufnehmen zu können. Die Kamera 54 ist bevorzugt mit einem Zoom-Objektiv 56 versehen.

Die Kamera 54 kann in unterschiedlicher Weise angeordnet sein. Gemäß einer ersten Variante ist die Kamera 54 auf einem Stativ befestigt und nimmt beispielsweise die Seiten eines Buches auf, das vor der Kamera 54 auf einem entsprechenden Ständer liegt und dort Seite für Seite umgeblättert wird. Nach einer zweiten Variante wird die Kamera 54 von Hand getragen, beispielsweise von der Person 10 selbst, die damit eine bestimmte Vorlage selbst anvisiert. Bei einer dritten Variante wird die Kamera 54 vom Kopf 12 der Person 10 getragen. Sie befindet sich beispielsweise im Bereich der Bildwiedergabegeräte 26 oder ist mit diesen baulich integriert, so dass bei dieser Variante die Blickrichtung der Kamera 54 im wesentlichen mit der Blickrichtung 20 der Person 10 übereinstimmt.

Wie bereits erwähnt wurde, kann die Kamera 54 zugleich als Sensor zum Erfassen von Bewegungen des Kopfes 12 oder einer Hand eingesetzt werden. Hierfür werden aufeinander folgende Bilder der Kamera 54 analysiert und daraus ein Bewegungsvektor abgeleitet.

Die Kamera 54 ist in Figur 3 auf eine Vorlage 58 gerichtet. Die Vorlage 58 zeigt ein Bild 60, im dargestellten Beispiel einen Text 61. In dem oben geschilderten Beispielsfall, bei dem sich die Person 10 in einem Bahnhof befindet, trägt die Person 10 die Kamera 54 mit sich in der Hand oder am Kopf 12 und der Text 61 ist der in der Bahnhofshalle aushängende Fahrplan.

Ein optional vorgesehener vierter Eingang 62 des Bildspeichers 40 ist über eine Leitung 64 mit einem Scanner 66 verbunden. Der Scanner 66 kann z.B. ein Handscanner sein, also ein von Hand geführter Sensor, mit dem eine Vorlage 68 abgetastet werden kann. Die Vorlage 68 zeigt ein Bild 70, im dargestellten Beispiel ebenfalls einen Text 71. Die Vorlage 68 kann beispielsweise ein Buch oder eine Zeitung sein, die auf einen Tisch gelegt wird, um von der Person 10 mittels des Scanners 66 gelesen zu werden. Über einen mit einem Pfeil 67 in Figur 3 angedeuteten Umschalter kann die Sehhilfe 38 von einer ersten Betriebsart mit der Kamera 54 auf eine zweite Betriebsart mit dem Scanner 66 umgeschaltet werden.

Ein weiterer typischer Einsatzfall der Erfindung ist die Verwendung der Sehhilfe gemäß Figur 3 im Rahmen einer Unterrichtsveranstaltung für Sehbehinderte. Bei diesen Veranstaltungen müssen die Teilnehmer einerseits den Ausführungen eines Vortragenden bzw. Lehrers folgen und andererseits ihre Lehrmaterialien betrachten bzw. lesen.

Dies kann bei der Sehhilfe gemäß Figur 3 in einfacher Weise geschehen. Die Person 10 verwendet dann die vorzugsweise am Kopf 12 getragene Kamera 54, um dem Vortragenden zu folgen und schaltet bei Bedarf mittels des Schalters 67 auf den Scanner 66 um, damit er beispielsweise in einem Lehrbuch den Text 71 lesen oder das Bild 70 in einer Unterrichtsunterlage betrachten kann. Mit 72 ist in Figur 3 ein manuelles Eingabegerät bezeichnet. Dieses Eingabegerät 72 kann im einfachsten Fall ein Schalter sein, für komplexere Aufgaben kann es auch als Maus, als Tastatur oder aus einer Kombination der vorgenannten Elemente ausgebildet sein. Das Eingabegerät 72 steuert Funktionen der Sehhilfe 38.

Die Person 10 kann damit zum Beispiel Bereiche in einem Bild suchen und diese vergrößern. Um dabei den Vergrößerungsfaktor einzustellen, kann das Eingabegerät 72 als "virtuelle Lupe" so ausgebildet sein, dass man sie wie eine herkömmliche Linsenlupe von einer Unterlage 73 abhebt, der Abstand h von der Unterlage 73 mittels eines Sensors erfasst und als Steuergröße für den Vergrößerungsfaktor herangezogen wird. Wenn also die Person in diesem Falle mit dem Eingabegerät 72 zunächst einen Ausschnitt aus einem Bild anwählt und das Eingabegerät 72 dann anhebt, wird der angewählte Ausschnitt umso mehr vergrößert, je weiter die Person 10 das Eingabegerät 72 von der Unterlage 73 entfernt.

Ein Ausgang 77 des Bildspeichers 40 schließlich ist über eine Leitung 78 an die Bildwiedergabegeräte 26 angeschlossen.

Die Sehhilfe 38 arbeitet wie folgt:
Die Kamera 54 nimmt zum Beispiel das Bild 60 aus Figur 3 auf. Das aufgenommene Bild 60 wird in dem Bildspeicher 40 verarbeitet und in modifizierter Form an die Bildwiedergabegeräte 26 weitergeleitet.

Der Bildspeicher 40 ist in zwei Betriebsarten betreibbar. In einer ersten Betriebsart, einem Aufnahmemodus, nimmt der Bildspeicher 40 ein Bild auf, beispielsweise den mit der Kamera 54 erfassten Text 61 der Vorlage 58. Die aufgenommenen Daten werden in dem Bildspeicher 40 verarbeitet, so dass sie für eine Wiedergabe in den Bildwiedergabegeräten 26 geeignet sind. In einer zweiten Betriebsart, einem Wiedergabemodus, wird das verarbeitete bzw. modifizierte Bild dann den Bildwiedergabegeräten 26 zugeführt.

Der Aufnahmemodus und der Wiedergabemodus laufen zeitlich beabstandet ab. Die Person 10 wird daher zunächst mit der Kamera 54 ein bestimmtes Bild aufnehmen und sich dieses erst später in einer für sie geeignet aufbereiteten bzw. verarbeiteten oder modifizierten Form ansehen.

In dem oben geschilderten Beispielsfall kann also die Person 10 in der Bahnhofshalle den dort aushängenden Fahrplan zunächst durch entsprechende Kopf- bzw. Handbewegungen mit der Kamera 54 aufnehmen, also sozusagen abscannen, und sich dann zunächst an einen ruhigeren Ort zurückziehen, wo sie nicht durch andere Personen gestört wird. Die Person 10 kann dann dort in aller Ruhe den als Bild gespeicherten Fahrplan mit den Bildwiedergabegeräten 26 ansehen, in den Zeilen hin- und herlesen, bestimmte Stellen vergrößert ansehen usw. Das setzt natürlich voraus, dass die Sehhilfe 38 in der Lage ist, ein vollständiges und in Zeilenrichtung des Textes ausgerichtetes Bild des Fahrplanes aus den mehr oder weniger kontrollierten Kopf- bzw. Handbewegungen der Person 10 zusammenzufügen. Darauf wird weiter unten noch eingegangen werden.

Die Sehhilfe 38 kann ferner Ausschnitte von Bildern herstellen. Dies ist einerseits in einfacher Weise dadurch möglich, dass das Zoom-Objektiv 56 der Kamera 54 entsprechend eingestellt wird. Andererseits kann aber auch ein elektronischer Zoom verwendet werden, bei dem aus einem als Datenmenge vorliegenden Bild durch geeignete Auswahl der einen Bildpunkt (Pixel) definierenden Daten ein Bildausschnitt erzeugt und ggf. mit größerem Pixelabstand als Vergrößerung dargestellt wird. Weil dabei naturgemäß die Bildauflösung leidet, wird man in derartigen Fällen eine Kamera 54 mit von Hause aus hoher Bildauflösung verwenden. Auch der Einsatz eines Weitwinkelobjektives ist dabei zweckmäßig, um ein möglichst großes Ausgangsbild zu erhalten, das alle interessierenden Bildinhalte enthält. Im einfachsten Fall kann die Kamera 54 eine wesentlich höhere Anzahl von Bildpunkten haben als das Bildwiedergabegerät 26 und der Ausschnitt, ohne Vergrößerung, wird einfach dadurch hergestellt, dass nur ein bestimmter Teil der Bildpunkte in das Bildwiedergabegerät übertragen wird.

Es wurde bereits erwähnt, dass die Person 10 die Lage des jeweiligen Ausschnittes und dessen Vergrößerung einstellen kann, beispielsweise mittels des Eingabegerätes 72.

In einer wesentlichen Grundfunktion ermöglicht die Sehhilfe 38 es der Person 10 insbesondere Texte zu erkennen bzw. zu lesen, indem die Person 10 das Auslesen des Textes aus dem Bildspeicher 40 und deren Darstellung in den Bildwiedergabegeräten 26 durch Bewegen des Kopfes 12 steuert.

Wenn die Person im Wiedergabemodus des Bildspeichers 40 einen aufgenommenen Text lesen möchte, wird ihr der Text, beispielsweise eine Textzeile in den Bildwiedergabegeräten 26 zunächst als stehendes Bild dargeboten. Zum Weiterlesen muß die Person 10 dann ihren Kopf 12 drehen, wie dies auch beim natürlichen Lesen der Fall ist. Dabei wird die von dem ersten Sensor 22a erfasste, beim Lesen typische Drehbewegung 23a des Kopfes 12 in eine entsprechende Vorschubgeschwindigkeit beim Auslesen der Textzeile aus dem Bildspeicher 40 umgesetzt. Damit diese Umsetzung dabei feinfühlig bleibt, berücksichtigt die Sehhilfe 38 einerseits die Dreh- oder Winkelgeschwindigkeit des Kopfes 12, andererseits aber auch die jeweils eingestellte Vergrößerung bei der Abbildung des Textes 61 in den Bildwiedergabegeräten 26. Wenn nämlich die Person 10 eine Textzeile mit einer hoch eingestellten Vergrößerung liest, dann wird die Vorschub- bzw. Auslesegeschwindigkeit aus dem Bildspeicher umgekehrt proportional zur Winkelgeschwindigkeit der Verdrehung 23a des Kopfes 12 eingestellt, weil ein vergrößerter Text langsamer gelesen werden muss als ein Text mit geringerer Vergrößerung, bei dem jeweils eine größere Textmenge sichtbar ist. Anders herum kann die Vergrößerung automatisch der jeweiligen Winkelgeschwindigkeit nachgeführt werden. Entsprechendes gilt natürlich auch beim Betrachten von textfreien Bildern, wenn die Person 10 mit der Verdrehung 23a des Kopfes 12 das Bild in einem Schwenk panoramaartig betrachten möchte.

Beim Lesen von Texten ergibt sich häufig das bereits erwähnte Problem, dass diese nicht in einer Richtung parallel zur Richtung der Textzeilen aufgenommen wurden. Dieses Problem tritt vor allem dann auf, wenn der Text mit einer von Hand oder vom Kopf geführten Kamera oder mit einem manuellen Scanner aufgenommen wurde. In diesem Falle sind die Bewegungen dieser Aufnahmeelemente häufig ganz unregelmäßig und jedenfalls nicht gerade. Die erfindungsgemäße Sehhilfe sieht hierfür eine im Bildspeicher 40 realisierte Option vor, die in den Figuren 4 und 5 veranschaulicht ist.

In Figur 4 ist dargestellt, dass der Text 61 mit seinen Textzeilen 80 und den zwischen den Textzeilen 80 befindlichen Leerzeilen 82 schräg zu einer ersten Richtung 84 aufgenommen wurde, die der Ausleserichtung entspricht. Um den Text 61 nun korrekt auszurichten, wird der Text 61 in Richtung einer Linie 86 abgetastet, die parallel zu der ersten Richtung 84 verläuft. Beim Abtasten der Linie 86 wird der Grauwert entlang der Linie 86 integriert. Die Linie 86 wird nun schrittweise in einer zweiten Richtung 88 verschoben, die quer zur ersten Richtung 84 verläuft und es wird erneut der Grauwert entlang der verschobenen Linie integriert. Dadurch wird der Text 61 nach und nach vollständig überstrichen.

Das jeweils gemessene Integral des Grauwertes wird entlang der zweiten Richtung 88 in einem Verlauf 90 aufgetragen. Man erkennt aus Figur 4 deutlich, dass der Verlauf 90 in dem Bereich, in dem die Linie 86 nur durch eine Leerzeile 82 verläuft, ein Minimum 92 zeigt und entsprechend ein Maximum 94 dort, wo sie nur durch eine Textzeile 80 verläuft. Dazwischen gibt es Übergänge 96 in den Bereichen, in denen die Linie 86 jeweils abschnittsweise sowohl durch eine Textzeile 80 als auch durch eine Leerzeile 82 verläuft. Die Steilheit der Übergänge 96 hängt dabei von der Schrägstellung des Textes 61 zur ersten Richtung 84 ab.

Mit einer Regelung auf den Maximalwert kann nun der Text 61 in seiner Ebene verdreht werden, wie mit einem Pfeil 98 angedeutet, bis er schließlich die korrekte Ausrichtung gemäß Figur 5 erreicht, bei der die Steigung der Übergänge 96' maximal ist. In Figur 5 sind die verdrehten Elemente jeweils durch Hinzufügen eines Apostrophs zu dem jeweiligen Bezugszeichen gekennzeichnet.

Als Alternative zu dem vorstehend beschriebenen Vorgehen kann der verdrehte Text 61' auch zweidimensional erfasst und einer 2D-Fourier-Transformation unterworfen werden, die gleichfalls ein für Steuerzwecke geeignetes Signal liefert, dass das Ausmaß der Verdrehung anzeigt. Entsprechende Programme sind dem Fachmann bekannt.

Die Sehhilfe 38 modifiziert also ein z.B. von der Kamera 54 aufgenommenes Bild eines Textes 61 in einen Text 61', der im Bildspeicher 40 für eine Darstellung in den Bildwiedergabegeräten 26 bereitgestellt wird. Die Person 10 kann diesen modifizierten Text 61' nun in seiner korrekten Ausrichtung ansehen und lesen.

Wenn der Text 61 in eine korrekt ausgerichtete Lage 61' gebracht wurde, ist es auch einfach möglich, einen Zeilensprung zu realisieren. Wenn die Person 10 beim Lesen einer Textzeile 80 an deren Ende angekommen ist, kann entweder automatisch an den Anfang der nächsten Textzeile weitergeschaltet werden oder die Person löst diesen Weiterschaltvorgang durch eine Nickbewegung des Kopfes 12 aus, die mit dem Neigungssensor 22b erfasst wird. Das gleich kann natürlich auch rückwärts realisiert werden, wenn die Person an eine frühere Stelle des Textes zurückkehren möchte und die Textzeile zu diesem Zweck in umgekehrter Richtung betrachtet. Dann wird am Anfang der Textzeile zum Ende der vorhergehenden Textzeile umgeschaltet, sei es automatisch oder durch eine Nickbewegung in umgekehrter Richtung.

Es wurde bereits weiter oben darauf hingewiesen, dass es insbesondere bei einer zeitlichen Trennung von Aufnahme- und Wiedergabemodus wichtig ist, zu gewährleisten, dass bei der Aufnahme wirklich die gesamte interessierende Information aufgenommen wurde. Genau so wichtig ist es auch bei einer Aufnahme, die durch ein manuelles oder durch eine Kopfbewegung erzeugtes Abscannen hergestellt wurde, dass ein vollständiges und wahres Gesamtbild erzeugt wird. Hierzu ist eine weitere im Bildspeicher 40 realisierte Option der Sehhilfe 38 vorgesehen, die anhand der Figur 6 erläutert werden soll.

In Figur 6 bezeichnet 100 ein Bild, das die Person 10 zunächst aufnimmt, beispielsweise nach dem Einschalten oder dem Ausrichten der Kamera 54. Dieses Bild erfasst jedoch nur einen Teil des insgesamt interessierenden Vorlagenbereiches, beispielsweise weil das Objektiv eine längere Brennweite hat. Durch Verschwenken der Kamera in einer Kreisbewegung werden nun nacheinander verschobene Teilbilder 102, 104, 106 und 108 aufgenommen und abgespeichert. Durch geeignete Programme können diese Teilbilder 100 - 108 nun so aneinandergesetzt werden, dass ein nahtloses Gesamtbild 110 erzeugt wird, bei dem die überlappenden Bereiche der Teilbilder 100 - 108 herausgerechnet bzw. zur Verbesserung der Bildqualität miteinander verknüpft werden. Programme hierzu sind dem Fachmann bekannt.

Schließlich ermöglicht es eine weitere, im Bildspeicher 40 realisierte Option, eine Zitterbewegung der Kamera 54 zu kompensieren. Wenn die Kamera 54 beispielsweise am Kopf 12 der Person 10 getragen wird, kann eine solche Zitterbewegung mittels der Sensoren 22a und 22b erfasst werden. Programme zur Zitterkompensation sind dem Fachmann ebenfalls bekannt.

Schließlich kann im Falle eines zeilenweisen Lesens eines Textes noch eine weitere Option vorgesehen werden, bei der eine Sprachwiedergabeeinheit (nicht dargestellt) ein Sprachsignal des Textes erzeugt.

## Patentansprüche

1. Sehhilfe für sehbehinderte Personen (10), mit einem ein Bild (60, 70) aufnehmenden Bildaufnahmegerät, mit einem an das Bildaufnahmegerät angeschlossenen Bildspeicher (40) und mit einem an den Bildspeicher (40) angeschlossenen, am Kopf (12) der Person (10) getragenen Bildwiedergabegerät (26), wobei der Bildspeicher (40) in einem Aufnahmemodus und in einem Wiedergabemodus betreibbar ist, wobei in dem Aufnahmemodus mittels des Bildaufnahmegerätes ein Bild (60, 70) aufgenommen und in einem Bildspeicher (40) abgelegt und in dem Wiedergabemodus das modifizierte Bild an das Bildwiedergabegerät (26) weitergeleitet wird, und wobei ein manuelles Eingabegerät (72) zum Aufrufen des Wiedergabemodus in einem einstellbaren zeitlichen Abstand von dem Aufnahmemodus vorgesehen ist, **dadurch gekennzeichnet, dass** die Sehhilfe (10) derart ausgebildet ist, dass bei der Aufnahme eines in Zeilen (80) wiedergegebenen Textes (61, 71) der Text (61, 71) im Aufnahmemodus zeilenweise in den Bildspeicher (40) eingelesen und dabei in Zeilenrichtung (84) ausgerichtet wird, und dass erste Mittel vorgesehen sind, um in dem Aufnahmemodus zunächst eine Mehrzahl von Einzelbildern (100 - 108) eines Gesamtbildes (110) aufzunehmen und alsdann ein Gesamtbild (110) aus den Einzelbildern (100 - 108) elektronisch zusammenzusetzen, wobei das Bildaufnahmegerät eine Kamera (54) ist, und wobei die Kamera (54) am Kopf (12) der Person (10) befestigt ist, wobei mindestens ein Sensor (22a, 22b) zum Erfassen von Bewegungen (23a, 23b) des Kopfes (12) vorgesehen ist, und dass der Sensor (22a, 22b) an den Bildspeicher (40) angeschlossen ist, derart, dass ein im Bildspeicher (40) gespeichertes Bild in Abhängigkeit von den Bewegungen (23a, 23b) modifiziert und an das Bildwiedergabegerät (26) weitergeleitet wird, und wobei Mittel zum Kompensieren von Zitterbewegungen des Kopfes (12) vorgesehen sind, wobei das vom Kopf (12) der Person (10) getragene Bildaufnahmegerät den mindestens ein Sensor (22a, 22b) zum Erfassen von Bewegungen (23a, 23b) ausbildet.

2. Sehhilfe nach Anspruch 1, **dadurch gekennzeichnet, dass** das Bildaufnahmegerät stationär befestigt ist.

3. Sehhilfe nach einem oder mehreren der Ansprüche 1 oder 2, **dadurch gekennzeichnet, dass** zweite Mittel vorgesehen sind, um in dem Aufnahmemodus zunächst ein Gesamtbild aufzunehmen und alsdann einen Ausschnitt aus dem Gesamtbild zu bilden.

4. Sehhilfe nach Anspruch 1 und 3, **dadurch gekennzeichnet, dass** die zweiten Mittel als Zoomobjektiv (56) der Kamera (54) ausgebildet sind.

5. Sehhilfe nach Anspruch 4, **dadurch gekennzeichnet, dass** die zweiten Mittel als elektronische Schaltung ausgebildet sind, die aus einem abgespeicherten hochaufgelösten elektronischen Bild nur ein Teil des Speicherinhaltes ausliest.

6. Sehhilfe nach einem oder mehreren der Ansprüche 3 bis 5, **dadurch gekennzeichnet, dass** ein manuelles Eingabegerät (72) zum Definieren des Ausschnitts, insbesondere zum Einstellen einer Vergrößerung, vorgesehen ist.

7. Sehhilfe nach Anspruch 6, **dadurch gekennzeichnet, dass** das Eingabegerät (71) eine Maus ist.

8. Sehhilfe nach Anspruch 6 oder 7, **dadurch gekennzeichnet, dass** das Eingabegerät (71) von einer Unterlage (73) abhebbar ist und Mittel zum Erfassen des Abstandes (h) von der Unterlage (73) aufweist, und dass der Ausschnitt in Abhängigkeit von dem Abstand (h) definiert, insbesondere eine Vergrößerung des Ausschnittes in Abhängigkeit von dem Abstand (h) eingestellt wird.

9. Sehhilfe nach einem oder mehreren der Ansprüche 1 bis 8, **dadurch gekennzeichnet, dass** der mindestens eine Sensor ein Drehratensensor (22b) ist.

10. Sehhilfe nach einem oder mehreren der Ansprüche 1 bis 9, **dadurch gekennzeichnet, dass** der mindestens eine Sensor ein Neigungssensor (22a) ist.

11. Sehhilfe nach einem oder mehreren der Ansprüche 1 bis 10, **dadurch gekennzeichnet, dass** an den Bildspeicher (40) ferner ein Handscanner (66) angeschlossen ist, und dass Ausgangssignale des Handscanners (66) alternativ (67) zu den Ausgangssignalen der Kamera (54) in den Bildspeicher (40) einlesbar sind.

12. Sehhilfe nach einem oder mehreren der Ansprüche 1 bis 11, **dadurch gekennzeichnet, dass** das Bildwiedergabegerät (26) an einer Brille (14) befestigt ist.

13. Sehhilfe nach Anspruch 12, **dadurch gekennzeichnet, dass** das Bildwiedergabegerät (26) schwenkbar an der Brille (14) befestigt ist, derart, dass es in einer ersten Stellung (26) außerhalb des Gesichtsfeldes (20) der Brille (14) und in einer zweiten Stellung (26') im Gesichtsfeld (20) der Brille (14) angeordnet ist.

14. Sehhilfe nach einem oder mehreren der Ansprüche 1 bis 13, **dadurch gekennzeichnet, dass** der mindestens eine Sensor (22a, 22b) an einer Brille (14) angeordnet ist.

15. Sehhilfe nach einem oder mehreren der Ansprüche 1 bis 14, **dadurch gekennzeichnet, dass** bei einer Wiedergabe eines Textes in Zeilen Mittel zur Sprachausgabe des Textes vorgesehen sind.

## Claims

1. Visual aid for visually impaired persons (10), comprising an image recording device that records an image (60, 70), comprising an image memory (40) that is connected to the image recording device, and comprising an image rendering device (26) that is connected to the image memory (40) and worn on the head (12) of the person (10), wherein the image memory (40) is operable in a recording mode and in a rendering mode, wherein an image (60, 70) is recorded by means of the image recording device and stored in an image memory (40) in the recording mode and the modified image is transmitted to the image rendering device (26) in the rendering mode, and wherein provision is made of a manual input device (72) for calling the rendering mode at an adjustable time interval from the recording mode, **characterized in that** the visual aid (10) is embodied in such a way that, when recording a text (61, 71) that is rendered in lines (80), the text (61, 71) is read into the image memory (40) line-by-line in the recording mode and, in the process, aligned in the line direction (84) and that first means are provided in order, in the recording mode, to initially record a plurality of individual images (100-108) of an overall image (110) and thereupon electronically compose an overall image (110) from the individual images (100-108), wherein the image recording device is a camera (54) and wherein the camera (54) is fastened to the head (12) of the person (10), wherein provision is made of at least one sensor (22a, 22b) for capturing movements (23a, 23b) of the head (12) and that the image sensor (22a, 22b) is connected to the image memory (40) in such a way that an image stored in the image memory (40) is modified depending on the movements (23a, 23b) and transmitted to the image rendering device (26), and wherein means are provided for compensating jitter movements of the head (12), wherein the image recording device worn on the head (12) of the person (10) forms the at least one sensor (22a, 22b) for capturing movements (23a, 23b).

2. Visual aid according to Claim 1, **characterized in that** the image recording device is fastened in stationary fashion.

3. Visual aid according to one or more of Claims 1 and 2, **characterized in that** second means are provided in order, in the recording mode, to initially record an overall image and thereupon form of a section from the overall image.

4. Visual aid according to Claims 1 and 3, **characterized in that** the second means are embodied as a zoom lens (56) of the camera (54).

5. Visual aid according to Claim 4, **characterized in that** the second means are formed as an electronic circuit which, from a stored, high-resolution electronic image, only reads part of the memory content.

6. Visual aid according to one or more of Claims 3 to 5, **characterized in that** a manual input device (72) is provided for defining the section, in particular for setting a magnification.

7. Visual aid according to Claim 6, **characterized in that** the input device (71) is a mouse.

8. Visual aid according to Claim 6 or 7, **characterized in that** the input device (71) is able to be lifted from a pad (73) and said input device has means for detecting the distance (h) from the pad (73), and **in that** the section is defined depending on the distance (h), in particular a magnification of the section being set depending on the distance (h).

9. Visual aid according to one or more of Claims 1 to 8, **characterized in that** the at least one sensor is a rotational rate sensor (22b).

10. Visual aid according to one or more of Claims 1 to 9, **characterized in that** the at least one sensor is an inclination sensor (22a).

11. Visual aid according to one or more of Claims 1 to 10, **characterized in that** a hand scanner (66) is further connected to the image memory (40) and **in that** output signals of the hand scanner (66) are readable into the image memory (40) as an alternative (67) to the output signals of the camera (54).

12. Visual aid according to one or more of Claims 1 to 11, **characterized in that** the image rendering device (26) is fastened to a pair of spectacles (14) .

13. Visual aid according to Claim 12, **characterized in that** the image rendering device (26) is fastened to the pair of spectacles (14) in pivotable fashion, in such a way that, in a first position (26), it is arranged outside of the field of view (20) of the pair of spectacles (14) and, in a second position (26'), it is arranged in the field of view (20) of the pair of spectacles (14).

14. Visual aid according to one or more of Claims 1 to 13, **characterized in that** the at least one sensor (22a, 22b) is arranged on a pair of spectacles (14) .

15. Visual aid according to one or more of Claims 1 to 14, **characterized in that**, when a text is rendered in lines, means are provided for a voice output of the text.

## Revendications

1. Aide visuelle pour personnes malvoyantes (10), comprenant un appareil d'enregistrement d'images qui enregistre une image (60, 70), comprenant une mémoire d'images (40) raccordée à l'appareil d'enregistrement d'images et comprenant un appareil de reproduction d'images (26) raccordé à la mémoire d'images (40) et porté au niveau de la tête (12) de la personne (10), la mémoire d'images (40) pouvant fonctionner dans un mode d'enregistrement et dans un mode de reproduction, dans le mode d'enregistrement une image (60, 70) étant enregistrée au moyen de l'appareil d'enregistrement d'images et stockée dans une mémoire d'images (40) et dans le mode de reproduction l'image modifiée étant transférée à l'appareil de reproduction d'images (26), et un appareil de saisie manuel (72) destiné à afficher le mode de reproduction dans un écart temporel réglable par rapport au mode d'enregistrement étant présent, **caractérisée en ce que** l'aide visuelle (10) est configurée de telle sorte que lors de l'enregistrement d'un texte (61, 71) reproduit en lignes (80), le texte (61, 71) est injecté dans la mémoire d'images (40) ligne par ligne dans le mode d'enregistrement et ainsi orienté dans le sens des lignes (84) et **en ce qu'**il existe des premiers moyens pour enregistrer tout d'abord une pluralité d'images individuelles (100 - 108) d'une image complète (110) dans le mode d'enregistrement et assembler ensuite électroniquement une image complète (110) à partir des images individuelles (100 - 108), l'appareil d'enregistrement d'images étant une caméra (54) et la caméra (54) étant fixée à la tête (12) de la personne (10), au moins un capteur (22a, 22b) étant présent pour détecter des mouvements (23a, 23b) de la tête (12), et **en ce que** le capteur (22a, 22b) est raccordé à la mémoire d'images (40) de telle sorte qu'une image mémorisée dans la mémoire d'images (40) est modifiée en fonction des mouvements (23a, 23b) et transférée à l'appareil de reproduction d'images (26), et des moyens étant présents pour compenser les mouvements de tremblement de la tête (12), l'appareil d'enregistrement d'images portée par le tête (12) de la personne (10) formant l'au moins un capteur (22a, 22b) servant à détecter des mouvements (23a, 23b).

2. Aide visuelle selon la revendication 1, **caractérisée en ce que** l'appareil d'enregistrement d'images est fixé en position fixe.

3. Aide visuelle selon une ou plusieurs des revendications 1 ou 2, **caractérisée en ce que** des deuxièmes moyens sont présents pour, dans le mode d'enregistrement, enregistrer tout d'abord une image complète et ensuite former un extrait à partir de l'image complète.

4. Aide visuelle selon les revendications 1 et 3, **caractérisée en ce que** les deuxièmes moyens sont réalisés sous la forme d'un objectif à zoom (56) de la caméra (54).

5. Aide visuelle selon la revendication 4, **caractérisée en ce que** les deuxièmes moyens sont réalisés sous la forme d'un circuit électronique qui, à partir d'une image électronique à haute résolution mémorisée, ne lit qu'une partie du contenu de la mémoire.

6. Aide visuelle selon une ou plusieurs des revendications 3 à 5, **caractérisée en ce qu'**un appareil de saisie manuel (72) est présent pour la définition de l'extrait, notamment pour régler un grossissement.

7. Aide visuelle selon la revendication 6, **caractérisée en ce que** l'appareil de saisie (71) est une souris.

8. Aide visuelle selon la revendication 6 ou 7, **caractérisée en ce que** l'appareil de saisie (71) peut être soulevé d'un support (73) et possède des moyens pour détecter l'écart (h) par rapport au support (73), et **en ce que** l'extrait est défini en fonction de l'écart (h), notamment un grossissement de l'extrait est réglé en fonction de l'écart (h).

9. Aide visuelle selon une ou plusieurs des revendications 1 à 8, **caractérisée en ce que** l'au moins un capteur est un capteur de vitesse de rotation (22b).

10. Aide visuelle selon une ou plusieurs des revendications 1 à 9, **caractérisée en ce que** l'au moins un capteur est un capteur d'inclinaison (22a).

11. Aide visuelle selon une ou plusieurs des revendications 1 à 10, **caractérisée en ce qu'**un appareil de numérisation manuel (66) est en plus raccordé à la mémoire d'images (40), et **en ce que** des signaux de sortie de l'appareil de numérisation manuel (66) peuvent être injectés dans la mémoire d'images (40) en alternative (67) aux signaux de sortie de la caméra (54).

12. Aide visuelle selon une ou plusieurs des revendications 1 à 11, **caractérisée en ce que** l'appareil de reproduction d'images (26) est fixé à une paire de lunettes (14).

13. Aide visuelle selon la revendication 12, **caractérisée en ce que** l'appareil de reproduction d'images (26) est fixé de manière pivotante à la paire de lunettes (14) de telle sorte que dans une première position (26), il est disposé à l'extérieur du champ de vision (20) de la paire de lunettes (14) et dans une deuxième position (26') il est disposé dans le champ de vision (20) de la paire de lunettes (14).

14. Aide visuelle selon une ou plusieurs des revendications 1 à 13, **caractérisée en ce que** l'au moins un capteur (22a, 22b) est disposé sur une paire de lunettes (14).

15. Aide visuelle selon une ou plusieurs des revendications 1 à 14, **caractérisée en ce que** lors d'une reproduction d'un texte en lignes, des moyens sont présents pour la sortie vocale du texte.
